# EUROPEAN PATENT SPECIFICATION

(11) **EP 2 478 608 B1**
(45) Date of publication and mention of the grant of the patent: **16.12.2020**
(21) Application number: 10768799.8
(22) Date of filing: 17.09.2010
(51) Int. Cl.: H02J 3/36

(54) **A POWER COLLECTION AND DISTRIBUTION SYSTEM**
ENERGIEGEWINNUNGS- UND VERTEILUNGSSYSTEM
SYSTÈME DE COLLECTE ET DE DISTRIBUTION D'ÉNERGIE

(30) Priority: 18.09.2009 GB 0916387
(43) Date of publication of application: 25.07.2012
(73) Proprietor: Offshore Renewable Energy Catapult, Northumberland NE24 1LZ (GB)
(72) Inventor: NG, Chong Hwa, Tyne and Wear NE10 9DF (GB); SOUTHERN, David, Northumberland NE63 8JA (GB); FERGUSON, Anna Dalgety, Durham DH4 6PA (GB)
(74) Representative: Murgitroyd & Company
(86) International application number: PCT/GB2010/051559
(87) International publication number: WO 2011/033308

(56) References cited:
- EP-A1- 2 293 407
- JIE CHEN ET AL: "Design of DC Architecture for Large-Scale Non-Grid-Connected Wind Power Generation System", POWER AND ENERGY ENGINEERING CONFERENCE, 2009. APPEEC 2009. ASIA-PACIFIC, IEEE, PISCATAWAY, NJ, USA, 27 March 2009 (2009-03-27), pages 1-5, XP031454753, ISBN: 978-1-4244-2486-3
- EVANS I C ET AL: "Powering The Way A Paper on AC Link TM Technology for 21st Century HVDC Transmission", ENERGY 2030 CONFERENCE, 2008. ENERGY 2008. IEEE, IEEE, PISCATAWAY, NJ, USA, 17 November 2008 (2008-11-17), pages 1-11, XP031423669, ISBN: 978-1-4244-2850-2

## Description

The present invention relates to power generation and in particular to a High Voltage Direct Current (HVDC) power collection and distribution system, for example, in the renewable energy sector.

Renewable energy power generation is an important alternative to overcome the current issues relating to conventional fossil fuel base power generation. Renewable energy power generation can be categorised into two main areas; large scale grid-connected generation, for example, large scale wind and marine farms, and domestic and building integrated small scale generation. The advantages of the present invention can also be realised on other forms of distributed power generation such as combined heat and power units which could be either fuelled from renewable sources, for example, biomass, or from fossil fuels, for example, natural gas

Attentions are mainly being focussed on large scale grid-connected generation which often provide higher return per capital ratio and, as a result, a lower electricity price.

To minimise the associated environmental impact of such power generation, large scale grid-connected renewable energy power plants are deployed remotely from the centres of demand and/or the national grid. The distances from the renewable energy power plant to the point of connection with the local distribution network and/or the national grid substations can be several tens of kilometres. These distances will become significantly greater when larger wind and marine farms are deployed further offshore. The majority of such known power plants are utilising power cable to transmit renewable energy over these large distances resulting in significant energy losses during power transmission.

Therefore, effective and efficient power collection, transmission and distribution of renewal energy from its source to the centres of demand and/or the national grid has become a significantly important issue.

A known solution is to transmit power in the form of high voltage direct current (HVDC) to reduce the environmental pollution, conduction and eddy current losses. Existing HVDC technologies are mainly developed to solve long distance point-to-point bulk power transmission in the existing hierarchy type power system structure with large centralised power stations. They are not entirely suitable or effective for use in the multipoint active network structure which has been suggested for distributed renewable energy power generation base systems.

In known wind and marine renewable energy power conversion systems, renewable energy is often converted to quality electrical power via AC generators and variable frequency converters (VFC). The output of the VFC is usually designed to be under 11kV, a medium voltage level (MV), so a step-up transformer is used to step-up the voltage to a high voltage (HV) level, such as 33kV, for generating farm to grid substation interconnection. The step-up transformer is often located in the nacelle or tower of a wind turbine, for example, or in a transformer house.

In the remote HVAC substation, the voltage level is further stepped up to a higher voltage (HV) level, such as 132kV, for long distance power transmission. Increasing the voltage level from MV to HV desirably achieves higher farm to substation power transmission efficiency.

However, due to the size of the transformer and the requirement for reactive power compensators and insulation, it is difficult to have local HVAC substations, particularly in offshore power plants. Moreover, the use of HVAC cable transmission systems, such as underground or subsea cable systems, to connect the wind or marine farm with the grid substations, can result in undesirably high power losses, such as cable conduction losses, and can also have a significant environmental impact.

It will be understood that the above-mentioned VFC is typically a back-to-back configuration with a common DC link. The converters at the generator end are generally referred to as an inverter unit (INU) and the converter at the grid end is generally referred to as a line rectifier unit (LRU). Other terminologies and abbreviations may be known but, for consistency, these abbreviations will be used herein.

The function of an INU is mainly to extract power from the generator while a LRU is mainly used to regulate the DC link voltage. Commercially available INU and LRU are reliable, cost effective, sophisticated and often fully compliant with current regulations and standards.

Evans et al, in publication "Powering The Way - A Paper on AC Link™ Technology for 21st Century HVDC Transmission" published in IEEE Energy2030 Atlanta, GA USA 17-18 November, 2008, discloses an HVDC transmission converter using AC Link™ topology, namely a resonant converter topology.

A first aspect of the present invention provides a power collection and distribution system comprising:
- a power collection module comprising a first hybrid HVDC transformer;
- a power distribution module comprising a second hybrid HVDC transformer; and
- a HVDC transmission link connecting the first hybrid HVDC transformer and the second hybrid HVDC transformer, wherein the first hybrid HVDC transformer is configured to receive a MVDC and step-up the MVDC to a HVDC for transmission via the HVDC transmission link and the second hybrid HVDC transformer is configured to receive the HVDC and step-down the HVDC to a MVDC,
wherein the first and second hybrid HVDC transformers allow bi-directional power flow,
wherein the power collection and distribution system comprises a plurality of generators connected directly to the first hybrid HVDC transformer.

Suitably the HVDC transmission link comprises at least one power cable. The transmission link may be installed underground or maybe a subsea installation. The transmission link may suitably cover tens of kilometres, or even greater distances, between the power collection module and power distribution module. For example, the first hybrid HVDC transformer may be located offshore on a wind turbine or marine apparatus and the second hybrid HVDC transformer may be located onshore many kilometres away. Stepping up the MVDC to a HVDC for power transmission via the DC transmission link significantly reduces the current in the HVDC transmission link and, as a result, the conduction losses during transmission. This desirably reduces the overall power loss during transmission. The HVDC transmission link may conveniently comprise one or more underground cables which eliminates the requirement for overland HV transmission tower or pylons. The environmental impact associated with known HV power transmission systems is therefore significantly reduced.

Preferably the first hybrid HVDC transformer comprises a first MV module and a first HV module between which a first HV high frequency transformer is connected.

Preferably the second hybrid HVDC transformer comprises a second HV module and a second MV module between which a second HV high frequency transformer is connected.

Preferably the first and second MV modules and first and second HV modules comprise high frequency switching devices, control means such as a controller unit, and drive and protection units. Suitably the high frequency switching is from 5 to 25 kHz. The high frequency switching may be higher than 25 kHz. Preferably the high frequency switching is from 10 to 20 kHz. Higher frequency switching could be realised with further technology development in the future.

Advantageously the high frequency switching allows for the size of particularly the first HV high frequency transformer to be significantly reduced compared to the conventional line frequency step up/step down transformers that are currently used, particularly in known HVDC systems. The significant reduction in HV high frequency transformer size desirably allows for the first hybrid HVDC transformer to be installed closer to the power source. For example, the first hybrid HVDC transformer may be installed in the nacelle or tower of a wind turbine or alternatively in an offshore tidal or wave machine.

Suitably superconductor technology may be used on the MVDC and/or HVDC side to achieve loss-less power connection.

Suitably the power source may be a wind turbine, tidal or wave power machine, or a photovoltaic power plant, for example. The power demand may be a distribution network or grid substation, for example.

Suitably the switching device is a semiconductor switching device. For example, the switching device may, at the current state of technology, be an Insulated Gate Bipolar Transistor (IGBT), an Insulated Gate Commutated Thyristor (IGCT) or a diode, or any other controllable switching device realised with further technology development in the future.

Suitably the MV and HV modules comprise more than one semiconductor switching device. Suitably one or both of the first and second MV modules and first and second HV modules may be a full or half bridge module.

Suitably one or both of the MV module and HV module may comprise soft switching means and/or loss-less snubber circuits. The modules may comprise a plurality of switching devices configured in series and/or parallel. The switching devices may be arranged in series to reduce voltage stress and in parallel to accommodate current stress.

Suitably the MV and HV modules further comprise energy storage devices.

Suitably the control means is adapted to ensure the MVDC input of the first hybrid HVDC transformer is proportional to the HVDC output of the first hybrid HVDC transformer, and similarly for the second hybrid HVDC transformer.

Suitably the control means is operatively connected by connection means to each of the first and second MV modules, the first and second HV modules and the first and second HV transformers. Suitably the connection means may comprise optical connection means. Suitably the optical connection means may be provided in a power cable.

Preferably the first and second HV high frequency transformers are magnetic, high power isolation transformers. Suitably the first and second hybrid HVDC transformers are HV galvanic isolated.

Suitably the first and second hybrid HVDC transformers comprise line fault protection means. Preferably the line fault protection means are provided integrally with the first and second hybrid HVDC transformers. Suitably the line fault protection means comprise force-commutated switching devices to provide fully integrated protection means to protect the first and second hybrid HVDC transformers and the power distribution system against known system faults, such as over/under voltage, over current, short circuit etc.

Preferably a converter or inverter is provided between the power source and the first MV module to convert an MVAC from the power source to an MVDC.

Preferably a rectifier is provided between the second MV module and the power demand to invert the MVDC to an MVAC.

Suitably the INU is provided between a generator at the power source and the MV module of the first hybrid HVDC transformer to extract power from the generator. The generator may form part of a wind turbine or wave/tidal machine, for example.

Suitably the LRU is provided between the MV module of the second hybrid HVDC transformer and the demand to regulate a DC link voltage.

Suitably the system is not limited to single line point-to-point HVDC power collection, transmission and distribution. Embodiments of the present invention provide a power collection and distribution system comprising a plurality of generators connected directly to the first hybrid HVDC transformer of the system described above.

Preferably a first MV module is provided between a first HV high frequency transformer and one or more INU. Suitably a INU is provided between one or more of the plurality of generators and a corresponding first MV module.

This multipoint power collection arrangement allows electrical energy to be synergised from more than one power source to improve system redundancy, maximise system rating and increase flexibility.

Suitably the significant reduction in size of the first HV high frequency transformer desirably allows the first hybrid HVDC transformer to be installed in the nacelle or tower of a wind turbine or alternatively in an offshore tidal or wave machine. Suitably the nacelle of a wind turbine may house a generator, an INU and a first hybrid HVDC transformer. Alternatively, the nacelle may house just a generator and an INU and the first hybrid HVDC transformer and LRU may be provided remotely therefrom.

Suitably the HVDC transmission link may be connected to a plurality of second hybrid HVDC transformers comprising second HV high frequency transformers. Each of the second HV high frequency transformers is connected to a second MV module which may be connected to a plurality of power demands via one or more LRU. Suitably the second hybrid HVDC transformers comprise the corresponding second MV modules. This multipoint power distribution arrangement allows better demand side control to be implemented. The potential fluctuation impact on a large renewable energy source to a single network can also be significantly reduced.

As described above, the power source may be a wind turbine, tidal or wave power machine, or a photovoltaic power plant. Where the source is a photovoltaic (PV) power plant, the generators of the above power distribution system may be replaced by a PV module comprising an array of PV cells. Suitably a controlled DC converter is connected to the PV module to ensure maximum power point tracking. Suitably, the array of PV cells, converter and first hybrid HVDC transformer may be part of the power collection module or power distribution module of the system.

Suitably the power source may comprise different power sources, such as any combination of wind, tidal, wave and solar. As described above, such a multipoint power collection arrangement desirably allows electrical energy of different forms to be synergised from more than one power source to improve system redundancy, maximise system rating and increase flexibility, regardless of the distance between the different power sources, to form a complete renewable power generation and distribution system.

A further aspect of the present invention provides a hybrid high voltage direct current (HVDC) transformer for use in a power distribution system as described above, the hybrid HVDC transformer comprising at least:
- a magnetic high power isolation HV high frequency transformer; and
- a HV module connected to an HVDC side of the HV high frequency transformer.

Preferably the hybrid HVDC transformer further comprises a MV module connected to a MVDC side of the HV high frequency transformer.

The hybrid HVDC transformer may conveniently be used in one of the abovementioned power collection and distribution systems on the power source side to provide the first MV module, first HV high frequency transformer and first HV module; and reversed to be used on the power demand side of the HVDC transmission means to provide the second HV module, second HV high frequency transformer and second MV module.

Advantageously, the significant reduction in size of the HV high frequency transformer allows for the hybrid HVDC transformer to be installed closer to the power source. For example, the hybrid HVDC transformer may be installed in the nacelle or tower of a wind turbine or alternatively in an offshore tidal or wave machine.

An embodiment of the present invention will now be described by way of example only with reference to the accompanying drawings, in which:
- Figure 1 shows a multipoint power collection and distribution system in accordance with the present invention;
- Figure 2 to 4 show alternative configurations of the collection module of the system of Figure 1; and
- Figure 5 shows a system for interconnection of different renewable energy sources using the configuration of Figure 2.

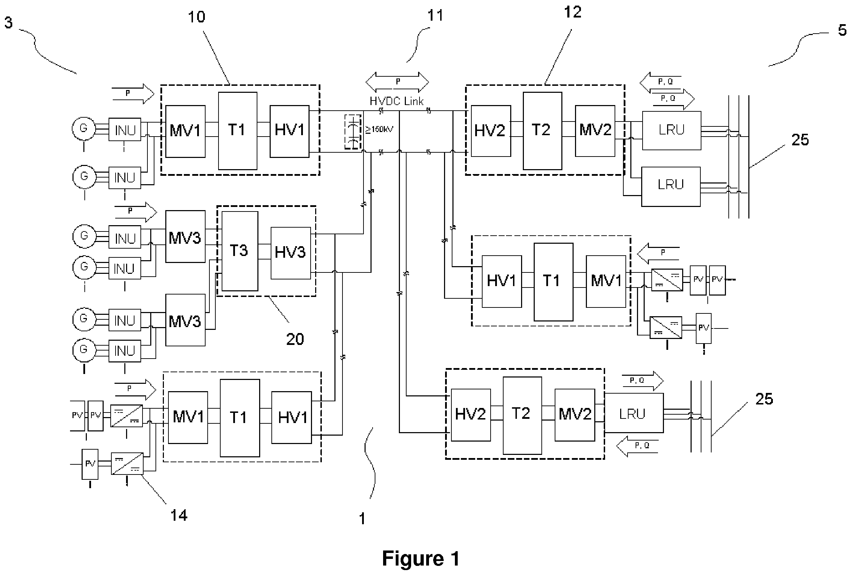

As shown in Figure 1, a multipoint power collection and distribution system 1, has an power collection module 3 and an power distribution module 5 linked by a transmission link 11. The collection module 3 includes a plurality of generators G of an onshore or offshore wind turbine or a wave or tidal machine, for example.

The generators G are connected to corresponding inverter units (INU) and the output therefrom is typically under 11kV. The power output from the generators G is a MVDC power output. The function of the INU is mainly to extract power from a corresponding generator G.

Each INU is connected to a first MV module MV1 before being input to a first magnetic high power, high frequency isolation transformer T1. The first transformer T1 steps up the voltage (MV) to a higher voltage level (HV). The power output from the first transformer T1 is input to a first HV module HV1 before being output from the HV module as HVDC into a transmission link 11 for transmission to the distribution side 5 of the system 1. The distance between the power collection module 3 and the power distribution module 5 of the system 1 can be many tens of kilometres or further, e.g. from an offshore wind or marine farm to an onshore grid substation.

Stepping up the MVDC to a HVDC for power transmission via the transmission link 11 significantly reduces the current in the transmission link and, as a result, the conduction losses during transmission of the HVDC from the collection side 3 of the system 1 to the distribution side 5. This desirably reduces the overall power loss during transmission and the environmental impact associated therewith.

The first MV and HV modules MV1, HV1 mainly consist of microprocessor controllers, power semiconductor switching devices, such as Insulated Gate Bipolar Transistors (IGBT), Insulated Gate Commutated Thyristors (IGCT) or diodes, for example, and energy storage devices. Depending on the power and voltage levels, the switching devices may be connected in series and/or parallel to withstand high voltage and/or high current stress.

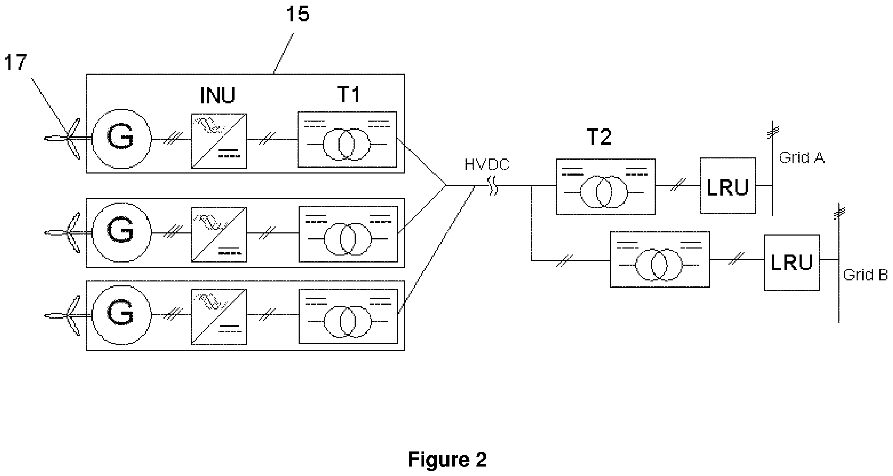

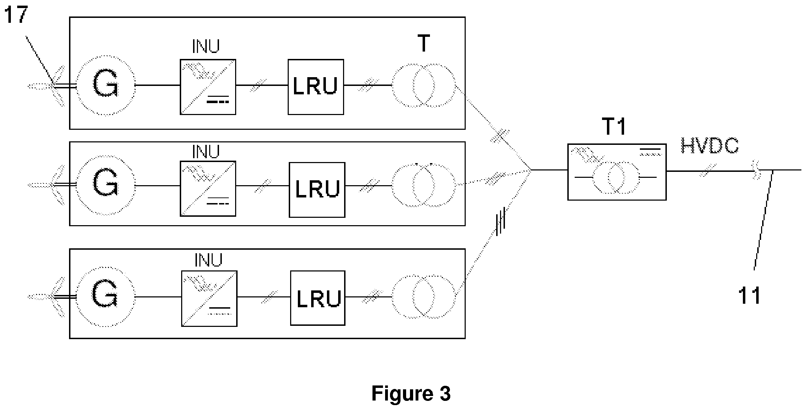

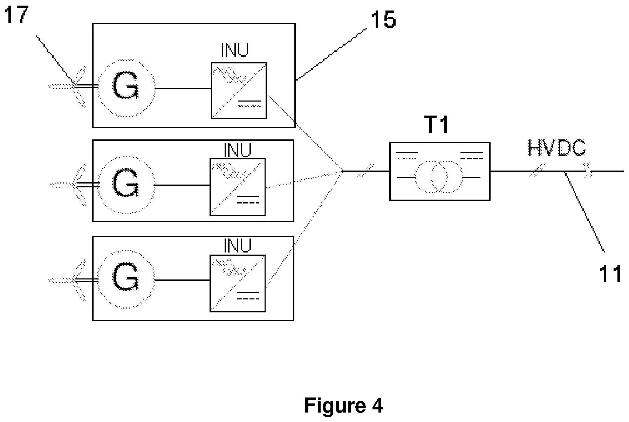

Advantageously, the high frequency switching, which operates at around 10 to 20 kHz, or above, allows the size of the first HV high frequency transformer T1 to be significantly reduced compared to conventional line frequency step up/down transformers currently used in known HVDC systems. Therefore, the first HV high frequency transformer T1 may be conveniently installed in the nacelle or tower of a wind turbine, for example, unlike transformers of the prior art. More conveniently, the MV module MV1, first HV high frequency transformer T1 and first HV module HV1 may form a hybrid HVDC transformer 10 which can be installed in the nacelle or tower of the wind turbine. This desirably reduces the need for a remote substation housing the same and reduces the environmental impact of the collection side 3 of the system 1. As shown in Figure 2, the nacelle or tower 15 of a wind turbine 17 may house a generator G, a INU and a first hybrid HVDC transformer T1. Alternatively, as shown in Figure 3, the nacelle or tower 15 may house a generator G, a INU, an HVAC transformer and a Line Rectifier Unit (LRU). The first hybrid HVDC transformer T1 may be located remote from the nacelle or tower 17. Further alternatively, as shown in Figure 4, the nacelle or tower 17 may house a generator G and a INU only and the first hybrid HVDC transformer T1 and LRU may be provided remotely therefrom.

Returning to Figure 1, the distribution side 5 of the system 1, includes a reversed hybrid HVDC transformer 12 comprising a second HV module HV2, a second transformer T2 and a second MV module MV2. The reversed hybrid HVDC transformer 12 receives the HVDC from the transmission link 11 and steps down the HVDC to a MVDC level. The lower voltage side of the reversed hybrid HVDC transformer 12 is coupled to a locally installed LRU which regulates the DC voltage and inverts the DC voltage into AC form with frequency and voltage levels which are suitable to be coupled to local AC networks, HVAC substations or the grid 25.

The hybrid HVDC transformers 10, 12 are controlled so an output voltage will be proportional to an input voltage and bi-directional power flow is allowed.

In accordance with the multipoint system, multiple generators G can be connected either to the MVDC link, i.e. the INU DC side, via more than one INU. Alternatively, the generators G can be connected to an alternative hybrid HVDC transformer 20 comprising a multiple winding transformer T3 and a HV module HV3 via more than one INU and a MV module MV3. Further generators G may be connected directly to the HVDC transmission link 11 via more than one INU and further hybrid HVDC transformers 10 or 20. These arrangements allow electrical energy to be synergised from more than one power source to improve system redundancy, maximise system rating and system flexibility.

In a similar manner, the HVDC transmission may be distributed to multiple demand points either from the HVDC transmission link 11 via more than one reversed hybrid HVDC transformer 12 and LRU, from the reversed hybrid HVDC transformer 12 via more than one MV module and LRU, or from a MVDC link, i.e. the LRU side of the reversed transformer 12, via multiple LRU. Multiple point power distribution desirably offers many benefits to network operators including improved demand side control to be implemented. The potential power fluctuation impact on a large renewable energy source to a single network can be significantly reduced. Conveniently, the power collection and distribution system 1 is suitable for use with other sources of energy, such as solar. The power source may comprise an array of photovoltaic cells PV, as shown in Figure 1. In this case, a INU will not be required to extract power from the photovoltaic cells PV but a suitable dc/dc power converter 14 will be connected to a single or plurality of photovoltaic cells PV to ensure maximum power point tracking. Suitably, the photovoltaic cells PV, converter 14 and hybrid transformer 10 may be located on the collection side 3 and/or distribution side 5 of the system 1.

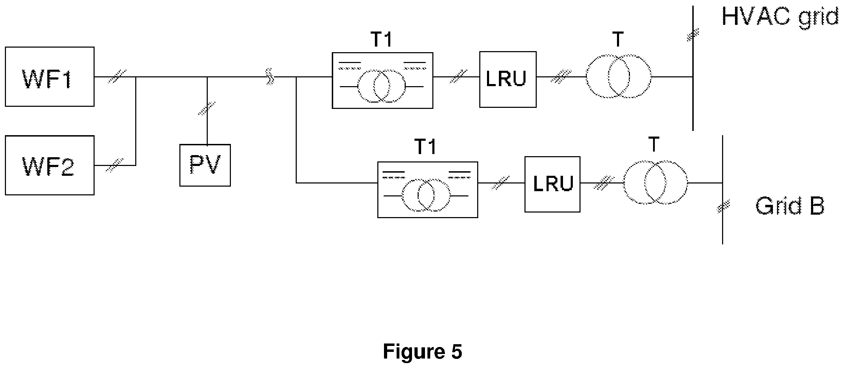

As shown in Figure 5, the collection side 3 of the system 1 may comprise multiple energy sources WF, MF, PV such as wind, marine and/or solar, to be synergised, regardless of the distance between each source. This multiple renewable energy system forms a complete renewable energy power generation system. The coupling points of the sources may be at the MVDC side of the first hybrid HVDC transformer, at the transformer or at the HVDC transmission link, in a similar manner as described above.

## Claims

1. A power collection and distribution system comprising:
- a power collection module comprising a first hybrid HVDC transformer;
- a power distribution module comprising a second hybrid HVDC transformer;
- a HVDC transmission link connecting the first hybrid HVDC transformer and the second hybrid HVDC transformer, wherein the first hybrid HVDC transformer is configured to receive a MVDC and step-up the MVDC to a HVDC for transmission via the HVDC transmission link and the second hybrid HVDC transformer is configured to receive the HVDC and step-down the HVDC to a MVDC,
wherein the first and second hybrid HVDC transformers allow bi-directional power flow;
**characterised in that** the power collection and distribution system comprises a plurality of generators connected directly to the first hybrid HVDC transformer.

2. A system according to claim 1, wherein the first and second hybrid HVDC transformers each comprise a HV high frequency transformer connected between a MV module and a HV module.

3. A system according to claim 2, wherein the MV modules and HV modules comprise high frequency switching devices, control means to control said switching devices, and drive and protection units.

4. A system according to claim 3, wherein the control means is operatively connected by connection means to a MV module, a HV module and a HV high frequency transformer.

5. A system according to any of claims 2 to 4, wherein one or both of the MV modules and HV modules is a full or half bridge module.

6. A system according to any of claims 2 to 5, wherein one or both of the MV modules and HV modules comprise soft switching means and/or loss-less snubber circuits.

7. A system according to claim 6, wherein the soft switching means comprises a plurality of switching devices configured in series and/or parallel.

8. A system according to any of claims 2 to 7, wherein a converter or inverter is provided between the power source and the MV module of the first hybrid HVDC transformer.

9. A system according to any one of claims 2 to 8, wherein a rectifier is provided between the MV module of the second hybrid HVDC transformer and the power demand.

10. A system according to any of claims 2 to 9, wherein the HV high frequency transformers are magnetic, high power galvanic isolated transformers.

11. A system according to any preceding claim, wherein the first and second hybrid HVDC transformers are bi-directional flow HV galvanic isolated hybrid transformers.

12. A system according to any preceding claim, wherein the first and second hybrid HVDC transformers comprise line fault protection means.

13. A system according to any of claims 2 to 12 comprising a plurality of generators connected to one or more of the MV modules of the first hybrid HVDC transformer.

14. A system according to claim 13, wherein an INU is provided between one or more of the generators and a corresponding MV module.

15. A system according to any preceding claim comprising one or more of a wind turbine, a wave or tidal machine, a photovoltaic cell, and a combined heat and power generation unit.

## Patentansprüche

1. Ein Leistungserfassungs- und -verteilungssystem, das Folgendes beinhaltet:
- ein Leistungserfassungsmodul, das einen ersten Hybrid-HGÜ-Transformator aufweist;
- ein Leistungsverteilungsmodul, das einen zweiten Hybrid-HGÜ-Transformator aufweist;
- eine HGÜ-Übertragungsverknüpfung, die den ersten Hybrid-HGÜ-Transformator und den zweiten Hybrid-HGÜ-Transformator verbindet, wobei der erste Hybrid-HGÜ-Transformator so konfiguriert ist, dass er eine MGÜ empfängt und die MGÜ zu einer HGÜ zur Übertragung über die HGÜ-Übertragungsverknüpfung stufenweise erhöht und der zweiten Hybrid-HGÜ-Transformator so konfiguriert ist, dass er die HGÜ empfängt und die HGÜ stufenweise zu einer MGÜ senkt,
wobei der erste und der zweite Hybrid-HGÜ-Transformator einen Zweiwegleistungsfluss ermöglichen;
**dadurch gekennzeichnet, dass** das Leistungserfassungs- und -verteilungssystem eine Vielzahl von Erzeugern beinhaltet, die direkt mit dem ersten Hybrid-HGÜ-Transformator verbunden sind.

2. System gemäß Anspruch 1, wobei der erste und der zweite Hybrid-HGÜ-Transformator jeweils einen HS-Hochfrequenztransformator beinhalten, der zwischen einem MS-Modul und einem HS-Modul verbunden ist.

3. System gemäß Anspruch 2, wobei die MS-Module und die HS-Module Hochfrequenzschaltvorrichtungen, ein Steuermittel zum Steuern der Schaltvorrichtungen sowie Antriebs- und Schutzeinheiten beinhalten.

4. System gemäß Anspruch 3, wobei das Steuermittel betriebsmäßig über ein Verbindungsmittel mit einem MS-Modul, einem HS-Modul und einem HS-Hochfrequenztransformator verbunden ist.

5. System gemäß einem der Ansprüche 2 bis 4, wobei eines oder beide der MS-Module und HS-Module ein Voll- oder Halbbrückenmodul sind.

6. System gemäß einem der Ansprüche 2 bis 5, wobei eines oder beide der MS-Module und HS-Module ein Weichschaltmittel und/oder verlustfreie Snubber-Schaltungen beinhalten.

7. System gemäß Anspruch 6, wobei das Weichschaltmittel eine Vielzahl von Schaltvorrichtungen beinhaltet, die in Reihe und/oder parallel konfiguriert sind.

8. System gemäß einem der Ansprüche 2 bis 7, wobei ein Wandler oder Wechselrichter zwischen der Leistungsquelle und dem MS-Modul des ersten Hybrid-HGÜ-Transformators bereitgestellt ist.

9. System gemäß einem der Ansprüche 2 bis 8, wobei ein Gleichrichter zwischen dem MS-Modul des zweiten Hybrid-HGÜ-Transformators und dem Leistungsbedarf bereitgestellt ist.

10. System gemäß einem der Ansprüche 2 bis 9, wobei die HS-Hochfrequenztransformatoren magnetische galvanisch isolierte Hochleistungstransformatoren sind.

11. System gemäß einem der vorhergehenden Ansprüche, wobei der erste und der zweite Hybrid-HGÜ-Transformator galvanisch isolierte Zweiwegfluss-HS-Hybrid-Transformatoren sind.

12. System gemäß einem der vorhergehenden Ansprüche, wobei der erste und der zweite Hybrid-HGÜ-Transformator ein Leitungsfehlerschutzmittel beinhalten.

13. System gemäß einem der Ansprüche 2 bis 12, das eine Vielzahl von Erzeugern beinhaltet, die mit einem oder mehreren der MS-Module des ersten Hybrid-HGÜ-Transformators verbunden sind.

14. System gemäß Anspruch 13, wobei eine Wechselrichtereinheit (INU, Inverter Unit) zwischen einem oder mehreren der Erzeuger und einem entsprechenden MS-Modul bereitgestellt ist.

15. System gemäß einem der vorhergehenden Ansprüche, das eine oder mehrere von einer Windkraftanlage, einer Wellen- oder Gezeitenmaschine, einer Photovoltaikzelle und einer kombinierten Wärme- und Leistungserzeugungseinheit beinhaltet.

## Revendications

1. Un système de collecte et de distribution d'électricité comprenant :
- un module de collecte d'électricité comprenant un premier transformateur CCHT hybride ;
- un module de distribution d'électricité comprenant un deuxième transformateur CCHT;
- une liaison de transmission CCHT connectant le premier transformateur CCHT hybride et le deuxième transformateur CCHT hybride, le premier transformateur CCHT hybride étant configuré pour recevoir un CCMT et élever la tension du CCMT jusqu'à un CCHT en vue d'une transmission par l'intermédiaire de la liaison de transmission CCHT et le deuxième transformateur CCHT hybride étant configuré pour recevoir le CCHT et abaisser la tension du CCHT jusqu'à un CCMT,
dans lequel les premier et deuxième transformateurs CCHT hybrides permettent un flux bidirectionnel d'électricité ;
**caractérisé en ce que** le système de collecte et de distribution d'électricité comprend une pluralité de générateurs connectés directement au premier transformateur CCHT hybride.

2. Un système selon la revendication 1, dans lequel les premier et deuxième transformateurs CCHT hybrides comprennent chacun un transformateur HT haute fréquence connecté entre un module MT et un module HT.

3. Un système selon la revendication 2, dans lequel les modules MT et les modules HT comprennent des dispositifs de commutation haute fréquence, un moyen de commande pour commander lesdits dispositifs de commutation, et des unités de pilotage et de protection.

4. Un système selon la revendication 3, dans lequel le moyen de commande est connecté fonctionnellement par un moyen de connexion à un module MT, à un module HT et à un transformateur HT haute fréquence.

5. Un système selon n'importe laquelle des revendications 2 à 4, dans lequel soit les modules MT, soit les modules HT, ou les deux, sont chacun un module en pont complet ou en demi-pont.

6. Un système selon n'importe laquelle des revendications 2 à 5, dans lequel soit les modules MT, soit les modules HT, ou les deux, comprennent un moyen de commutation douce et/ou des circuits d'amortissement sans perte.

7. Un système selon la revendication 6, dans lequel le moyen de commutation douce comprend une pluralité de dispositifs de commutation configurés en série et/ou en parallèle.

8. Un système selon n'importe laquelle des revendications 2 à 7, dans lequel un convertisseur ou onduleur est prévu entre la source d'électricité et le module MT du premier transformateur CCHT hybride.

9. Un système selon l'une quelconque des revendications 2 à 8, dans lequel un redresseur est prévu entre le module MT du deuxième transformateur CCHT hybride et la demande d'électricité.

10. Un système selon n'importe laquelle des revendications 2 à 9, dans lequel les transformateurs HT haute fréquence sont des transformateurs magnétiques de forte puissance à isolation galvanique.

11. Un système selon n'importe quelle revendication précédente, dans lequel les premier et deuxième transformateurs CCHT hybrides sont des transformateurs HT hybrides à isolation galvanique à flux bidirectionnel.

12. Un système selon n'importe quelle revendication précédente, dans lequel les premier et deuxième transformateurs CCHT hybrides comprennent un moyen de protection contre les défauts de ligne.

13. Un système selon n'importe laquelle des revendications 2 à 12 comprenant une pluralité de générateurs connectés à un ou plusieurs des modules MT du premier transformateur CCHT hybride.

14. Un système selon la revendication 13, dans lequel une unité onduleur (INU) est prévue entre un ou plusieurs des générateurs et un module MT correspondant.

15. Un système selon n'importe quelle revendication précédente comprenant un ou plusieurs éléments parmi une éolienne, une machine à houle ou à marée, une cellule photovoltaïque, et une unité de production combinée de chaleur et d'électricité.
